# EUROPEAN PATENT APPLICATION

(11) **EP 1 489 505 A2**
(43) Date of publication of application: **22.12.2004**
(21) Application number: 04076784.0
(22) Date of filing: 18.06.2004
(51) Int. Cl.: G06F 9/46

(54) **A system supporting communication between a web enabled application and another application**

(30) Priority: 20.06.2003 US 480424 P; 15.04.2004 US 826053
(71) Applicant: Siemens Medical Solutions Health Services Corporation, Malvern, PA 19355 (US)
(72) Inventor: Fang, Zhanghui, 19355 Malvern, PA (US); Martin, Eric, 08054 Mount Laurel, NJ (US)
(74) Representative: McGowan, Nigel George

(57) **Abstract**

A system employed by at least one web browser compatible. executable application for initiating an action by a second executable application, includes the following. A URL processor which generates, in response to a user command, a URL link in a predetermined particular format which includes context information and an action request identifier. The URL link represents an action to be performed by the second executable application. A URL link interpreter, coupled to said URL processor via a first mode of communication, which identifies said particular format URL link, extracts the context information and action request identifier from the particular format URL link, and initiates termination of the first mode of communication. A communication processor, coupled to said URL link interpreter, which initiates communication of said extracted context information and action request identifier to the second executable application by a second mode of communication different from said first mode of communication.

## Description

This application is based on Provisional application Serial No. 60/480,424, filed on June 20, 2003.

### Field of the Invention

The present invention relates generally to the field of network interoperability of a world wide web client application, and more specifically to a system that permits a web enabled application to make requests of and receive status updates from another application, in particular a traditional, non-web enabled software application.

### Background of the Invention

The world wide web (www) is a protocol system which links many web server computers to user computers, forming a significant portion of the internet. The web server computers store web-formatted documents, web-enabled applications, and may further include traditional computer programs and various other non-web applications. The web server may be conditioned to allow the traditional computer programs and applications to be accessed by web client computers that are connected to the server via the internet. The server computers allow access to the documents and applications by assigning to each of them a unique address known as a Universal Resource Locator (URL). A user requests documents and/or applications by sending a URL to the web server, and the web server returns the requested document or application to the requesting user.

Traditional non-web computer applications, which are sometimes referred to as ''fat clients", typically are defined by a human readable source code component. The source code is written in a high level programming language that is capable of being compiled or pseudo compiled into machine readable code. A computer system compiles the source code into an executable application. The executable application is typically installed on a computer system which executes the machine readable code.

Web computer applications, on the other hand are executed by web browser computer programs which are known as "thin clients". The web-formatted documents include instructions for displaying an image of a page. The "thin clients" rely primarily on a Graphical User Interface (GUI), implemented by a web browser application, to receive and interpret the instructions in the web-formatted document and to display the image in a window according to those instructions. These displaying instructions contain little or no executable code. When executable code is present it is generally in a scripting language that is dynamically delivered to the client computer as a part of the displaying instructions and is interpreted by the web browser container that executes on the web client computer. The web browser container limits the functional reach of any code residing in the client computer. During some operations, web client computers may need to have the capability to request actions from traditional fat client applications and receive status information regarding those requests.

Existing systems are constrained and offer limited capabilities in the interfacing and communication between web clients and fat clients. For example, they may provide the capability for a web client to forward requests to a fat client and enable the web client to receive status updates from the traditional fat application. But this capability is implemented by requiring polling of the web server by the web client. That is, the web client sends a request for status to the web server, which forwards the request to the fat client. The fat client, in response, sends status data to the web server, which forwards that data to the web client. The intercommunication involved between a web server and a web client while polling for status information is a burden on both the performance and usage of the computer network.

One method for minimizing the intercommunications required for polling for status is to incorporate executable code in the web client computer to provide direct communications between the web browser and the fat client. However, the introduction of non-web code into a web client computer can cause security and code distribution problems which are not present in web compatible applications and services alone. In general, web compatible applications do not require code distribution or installation in the client computer. In order for a user of a web client to obtain a service or to access an application via the internet, the user simply navigates to the URL where service or application is hosted. However, if non-web code, for example, an ActiveX control, is required in the web client by the desired service or application, the user needs to install the code before that service or application can be accessed. Non-web code may cause the client computer to be vulnerable to unauthorized access. An unauthorized user may be able to extract sensitive information from a computer system via non-web code installed by an unsophisticated client user that includes or by means of some other vulnerability known to the unauthorized user.

### Summary of the Invention

In accordance with principles of the present invention, a system employed by at least one web browser compatible executable application for initiating an action by a second executable application, includes the following. A URL processor which generates, in response to a user command, a URL link in a predetermined particular format which includes context information and an action request identifier. The URL link represents an action to be performed by the second executable application. A URL link interpreter, coupled to said URL processor via a first mode of communication, identifies said particular format URL link, extracts the context information and action request identifier from the particular format URL link, and initiates termination of the first mode of communication. A communication processor, coupled to said URL link interpreter, initiates communication of said extracted context information and action request identifier to the second executable application by a second mode of communication different from said first mode of communication.

### Brief Description of the Drawings

Figure 1 is a block diagram of a computer network providing communications between web and non-web enabled applications in accordance with the principles of the present invention;
Figure 2 is a block diagram showing the structure of the present invention as depicted in Figure 1;
Figure 3 is a flow diagram of the sequence of operations performed by the invention as depicted in Figure 2; and
Figure 4 is a flow diagram showing the interaction of a web based application with a non-web enabled application as performed by the present invention.

### Detailed Description of the Invention

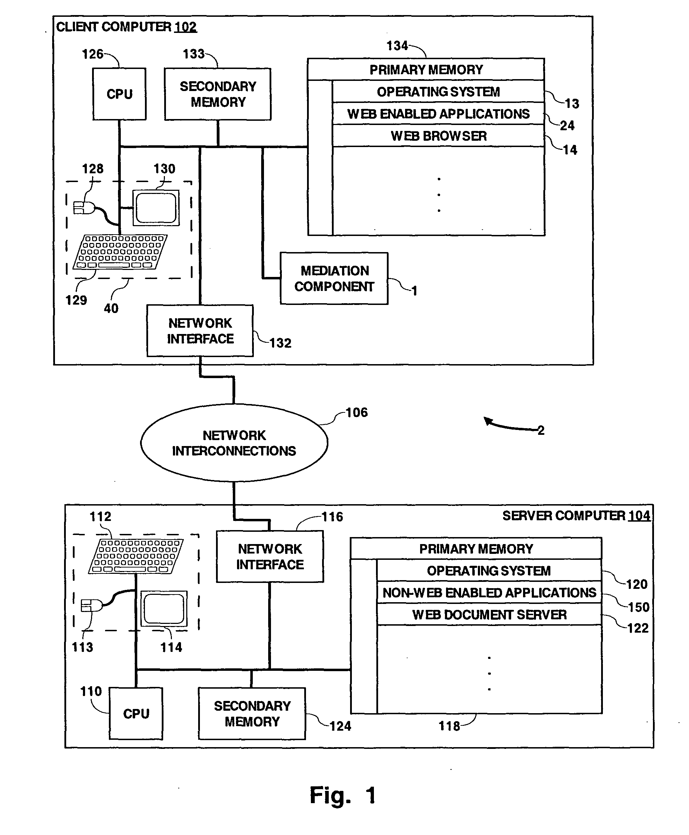

Referring to Figure 1, a computer network 2 is illustrated which includes at least one client computer 102 interconnected to at least one server computer 104 by means of a network interconnection 106. In the present invention the network interconnection 106 is typically some component of the internet, although it may also be a component of a local or wide area network or a communication channel established between programs on a single computer. The client computer 102 includes a central processing unit (CPU) 126, a user interface 40 including devices such as a mouse 128, a keyboard 129 and a display or monitor 130. The client computer 102 also includes a primary memory 134, a secondary memory 133 such as a disk drive and a network interface 132. The network interface 132 permits the client computer 102 to communicate with server computer 104 by means of the network interconnections 106.

The primary memory 134 of the client computer 102 stores an operating system 13 and a network or web browser 14, both of which may be retrieved or loaded from secondary memory 133. In the present invention, the web browser 14 is a JavaScript-capable program. JavaScript is derived from the Java programming language developed by Sun Microsystems of Mountain View, California. Typical web browsers 14 are commercially available in the form of, for example, HotJava from JavaSoft of Cupertino, California, Netscape Navigator available from Netscape Communications of Mountain View, California, and Internet Explorer available from Microsoft Corporation of Redmond, Washington.

The primary memory 134 also stores web documents and web enabled applications 24 that have been retrieved from a server computer 104. The web browser 14 and the operating system 13 are executed by the CPU 126. The operating system 13 coordinates and controls the functions of the web browser 14 in response to user commands received from the mouse 128 and keyboard 129.

Similarly, the server computer 104 contains a CPU 110, input devices 112 and 113, a monitor or display device 114, a network interface 116 a primary memory 118 and a secondary memory 124. The network interface 116 permits the server computer 104 to communicate with the client computer 102 by means of the network interconnections 106. The memory 118 of the server computer 104 stores an operating system 120, a web document server 122, and one or more non-web enabled applications 150. As used herein, a non-web enabled application 150 is an executable application that does not depend on web browser technology for its operation. The construction, maintenance and operation of the server and client machines is well known to a person having ordinary skill in the art.

The web browser 14 of the client computer 102 includes a control core for conditioning the CPU 126 to retrieve a web page from server computer 104 based on a web address (i.e. a universal resource locator (URL) parameter) and other data contained in the URL parameters. A web page may berepresented by data comprising at least one of, (a) HTML compatible data, (b) XML compatible data and (c) SGML compatible data. The retrieved web page may include a web enabled application 24. The web browser 14 is also capable of executing commands which causes a non-web enabled application 150 to be downloaded from the server computer 104 to the client computer 102. However, as described above, this results in security problems in the client computer 102.

The client computer 102 includes a mediation component 1 which enables the client computer 102 to make action requests to and receive status updates from a non-web-enabled application 150 on the server computer 104 . Because the non-web-enabled application 150 is not transferred to or executed by the client computer, no non-web technology is used in the client 102. The mediation component 1 does not require requests or polling of the web server 104 in order to obtain status information from the non-web applications 150. This advantageously eliminates security problems involved in employing some non-web applications such as, for example, Active X code, in the web client interface 132. The mediation component 1 also reduces the burden of distributing code when implementing communication between the web client 14 and the non-web application 150.

An executable application as used herein comprises code or machine readable instruction for implementing predetermined functions including those of an operating system, healthcare information system or other information processing system, for example, in response user command or input. An executable procedure as used herein is a segment of code (machine readable instruction), sub-routine, or other distinct section of code or portion of an executable application for performing one or more particular processes and may include performing operations on received input parameters (or in response to received input parameters) and provide resulting output parameters. A calling procedure is a procedure for enabling execution of another procedure in response to a received command or instruction. A processor as used herein is a device and/or set of machine-readable instructions for performing tasks. As used herein, a processor comprises any one or combination of, hardware, firmware, and/or software. A processor acts upon information by manipulating, analyzing, modifying, converting or transmitting information for use by an executable procedure or an information device, and/or by routing the information to an output device. A processor may use or comprise the capabilities of a controller or microprocessor, for example. An object as used herein comprises a grouping of data, executable instructions or a combination of both or an executable procedure.

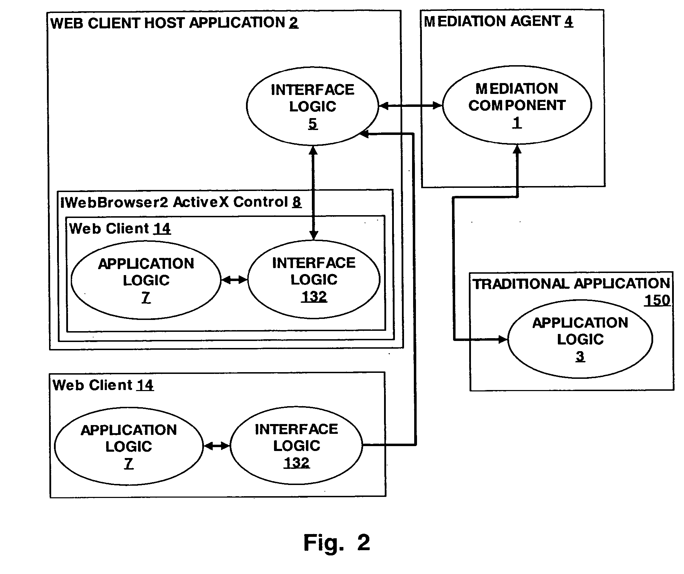

Figure 2 is a block diagram illustrating the structure of software implemented according to the invention. The software may be implemented in a workstation environment, or in a distributed environment. Referring to Figure 2, the traditional non-web enabled application 150 includes application logic 3 which directs the operation of the traditional application 150. The application logic 3 of the traditional application 150 interacts with a mediation component 1 of a mediation agent 4. In a similar manner, the web client 14 includes application logic 7 which directs the operation of the web browser and web browser interface logic 132. The application logic 7 of the web client 14 interacts with web browser interface logic 132, which in turn, may interact with external entities, such as web servers via sending URL requests and receiving web pages and web-applications in response. In a typical workstation environment, the web client 14 interface logic 132 interacts with the interface logic 5 of a web client host application 2. The interface logic 5 of the web client host application 2 also interacts with the mediation component 1 of the mediation agent 4.

Within a web client 14, a web page and associated web applications may be organized into a hierarchical structure of objects, in a known manner. Each such object is named, is defined by associated data generally termed properties, and is controlled by subroutines generally termed methods. In addition, objects may be controlled in response to events, or may generate events, e.g. in response to changes, possibly user generated, to properties of that event. For example, the overall object in a web page is a 'window'. The 'window' object may contain other objects, such as a 'document'. The 'window' object also includes properties, including the 'location' property, containing data representing the URL which is the source of the instructions which define the web page and web enabled application. The 'window' object may also include user control objects, such as 'buttons'. When the user activates a 'button' object, e.g. by clicking on the displayed image of a pushbutton with a mouse, an 'onClick' event is generated, processing of which may induce changes to other objects.

The web client host application 2 further includes the IWebBrowser2 control 8 Active X control. The IWebBrowser2 control 8 Active X control is a product of the Microsoft Corporation. ActiveX controls are Component Object Model (COM) objects that may be embedded into other applications running on a Microsoft Windows platform. The IWebBrowser2 control 8 Active X control may respond to events generated by the objects. In addition, while the identities of objects are known to the web client 14 itself, they are generally unknown and unavailable to other applications. The IWebBrowser2 control 8 permits outside applications to determine the identity of the objects defined in the web client 14.

The web client interface logic 132 residing within the web client 14 utilizes only web based technology such as the European Computer Manufacturers Association (ECMA) Script language ECMA-262, also known as JavaScript. A JavaScript program is a client side application that typically is a small program that can be sent, along with the data defining the web page, to the web browser 14 to execute animations, perform calculations or other straightforward tasks using the computing resources of the client computer 102 without having to send a request to the server 104 for further processing.

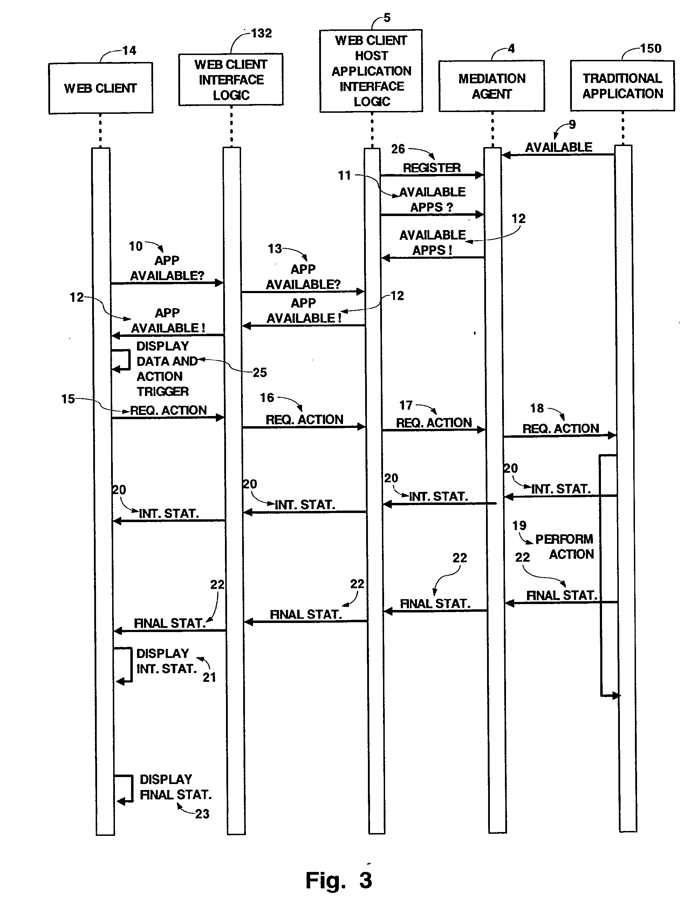

Figure 3 illustrates the sequence of operations performed by the present invention. Initially, the traditional applications 150 that are available for access by the web client 14 send a notification indicating their availability 9 to the mediation agent 4. When the web client host application 2 (Figure 2) is activated, the web client host application interface logic 5 performs a client registration function 26 and then initiates a query 11 in order to determine the availability of traditional applications 150. In response 12, the mediation agent 4 returns a list of available traditional applications 150 to the web client host application interface logic 5.

Subsequently, when the web client 14 reaches a point during its operation when action from a specific traditional application 150 is desired, the web client 14 initiates a query 10 to determine if the desired traditional application 150 is available. This query 10 is sent to the web interface logic 132, and then forwarded as request 13 to the web client host application interface logic 5. The web client host application interface logic 5 returns a message 12 to the web client interface logic 132 indicating whether the desired traditional application is available. The message 12 is then forwarded to the web client 14.

If the requested application 150 is available as indicated by the availability return message 12, an action trigger control 25, for example a pushbutton, and data indicating what action the action trigger control 25 represents, are displayed on the web page by the web client 14. If the requested application 150 is not found, the action trigger 25 is either not displayed or it is displayed in a disabled (grayed) mode.

If the user activates the action trigger control 25 by means of the mouse 128 or keyboard 129, the web client 14 then performs several processing functions, including the assembling of necessary contextual information based on the current state of the web client. The web client 14 also generates a request 15 for the traditional application 150 to perform a desired action by passing the traditional application 150 identifier, the desired action, and the assembled contextual information to the web client interface logic 132. The request 15 is subsequently forwarded as message 16 to the web client host application interface logic 5, then as message 17 to the mediator agent 4 as request 17, and finally as message 18 to the requested traditional application 150.

In response to the request for action 18, the traditional application 150 performs or attempts to perform the requested activity during interval 19. While the activity is being performed, the application 150 asynchronously generates and forwards to the mediation agent 4 one or more intermediate status messages 20, although in some cases the traditional application may not return any intermediate status messages. These status messages may include one or more of: an identifier identifying status of performance of a task by said second executable application; a status description; and/or a text message containing, for example, status information in textual form. The status messages 20, when generated, are forwarded to the mediation agent 4, the web client host application interface logic 5, the web client interface logic 132 and finally to the web client 14. The web client 14 may display a message 21 on the displayed web page representing the intermediate status message 20 from the traditional application 150. After completing the requested action 19, or discontinuing the action due to an error condition, the traditional application 150 may return the final status by sending a message 22 representing the final status to the mediation agent 4. The final status message 22 is subsequently forwarded to the web client host application interface logic 5, the web client interface logic 132 and ultimately to the web client 14. The web client 14 may display an indication 23 of the final status and may also change the displayed web page to another state since the requested action has either been completed or discontinued.

Communications from the web client interface logic 132 to the web client host application interface logic 5 are achieved through usage of capabilities provided by the IWebBrowser2 control 8 (Figure 2). The implementation or integration of the web client host application 2 with the IWebBrowser2 control 8 allows the web client host application 2 to capture events, such as website and frame navigation events, from within the web browser 14. For example, an event, 'OnBeforeNavigate2', notifies the web enabled application that the web browser 14 is about to navigate to a new URL. Access to the 'OnBeforeNavigate2' event via the IWebBrowser2 control 8 permits the web client host application 2 to be notified any time the user accesses (e.g. "clicks on") a link to a new URL before the web browser 14 navigates to that URL. The web client host application 2 may then analyze the target URL, and any posted data, before the web browser 14 navigates to that URL. The web client host application 2 has the option of either canceling the proposed navigation, allowing the proposed navigation to continue and/or performing other processing.

Whenever navigation is requested to a new URL, the identity of the object requesting this navigation is made available to the web enabled application 24 (Figure 1). The web enabled application 24 initially creates a frame object which is an invisible or hidden hypertext markup language/JavaScript (html/jsp) frame. As described above, if a desired traditional application 150 is available, then the web browser places a user control, such as a pushbutton, on the displayed web page. If the user desires the traditional application 150 to perform an action, the user activates the user control. In response, the web enabled application 24 conditions the hidden frame object to request a navigation to a predetermined URL, and includes data representing the desired traditional application 150, the desired action, and contextual information gathered from the other objects in the web page. The URL is passed in a first mode of communication, i.e. a normal URL request communication, through the web client interface logic 132 to the web client host application 2 via the IWebBrowser2 control 8. This generates an 'OnBeforeNavigate2' event.

Upon receiving an 'OnBeforeNavigate2' event from the IWebBrowser2 control 8, the web client host application interface logic 5 determines if the desired URL is from the hidden frame. If so, the web client host application interface logic 5 saves the URL and associated data and cancels the navigation. The web client host application interface logic 5 may transfer parameter data residing in the navigation URL to the web client host application interface logic 5. This transfer may be performed in a second mode of communication, for example by function call parameter passing.

Communication from the web client host application interface logic 5 to the web client interface logic 132 is also achieved through the novel use of capabilities provided by the Microsoft IWebBrowser2 control 8. Data representing the web enabled application 24 Component Object Model (COM), i.e. a compilation of all objects and their relationships, is initially acquired by the IWebBrowser2 control 8. From that data it is possible to determine if the web enabled application 24 data includes frames. If so, a list of the frames and their identification, termed an enumerator, is generated. This enumerator allows access to each frame in the form of a separate document. This document, in turn, may contain a JavaScript object. More specifically, the hidden html/jsp frame includes a special JavaScript which, when accessed, permits data to be passed to the web enabled application 24 in the form of function call parameters.

A program loop in the web client host application 2 is used to analyze the frames within the original parent web browser 14 document. When the hidden html/jsp frame is located, an identifier of a special JavaScript function, in the frame document is located. This is done by first performing an IDispatch function on the document contained in that frame. The IDispatch function can associate a positive integer identification number with a given named object. Then a GetIDsOfNames function is used to locate the identification data that refers to the special JavaScript function in the invisible html/jsp frame. The special JavaScript function may now be executed with desired parameters. Using this technique the web client host application interface logic 5 can directly access the JavaScript functions residing in the hidden html/jsp frames to pass data to the web browser 14. The web client 14 may then update the displayed web page in response to the received data. For example, the current status of the execution of the traditional application 150 may be received and displayed.

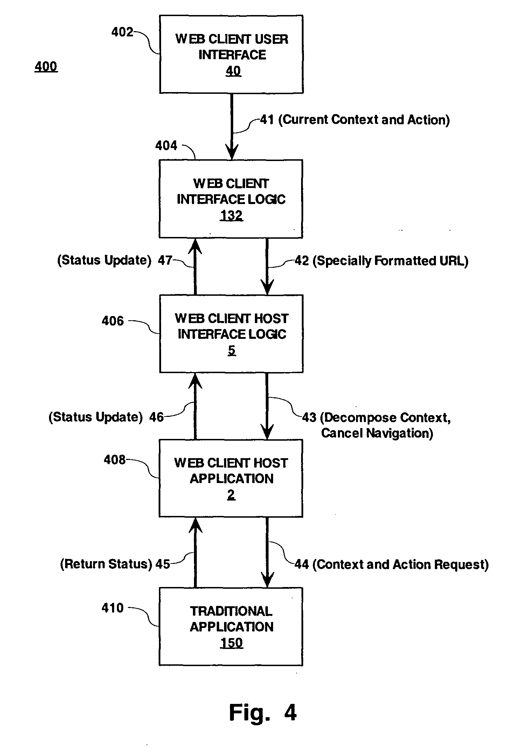

Figure 4 is a flowchart 400 which illustrates how a web client 14 interacts with a traditional application 150. At step 402 web client 14 displays, via the monitor 130 of user interface 40, a menu, list or some other image which allows the user to select some contextual information (for example, a customer name and their phone number from a list of customers) along with an action control (for example, a button labeled "Dial"). In a more general situation, the contextual information may include data such as: a user identifier, a patient identifier, a customer identifier, a source identifier, a destination identifier, a password, a computer operational session identifier, an identifier identifying a second executable application used to perform a user command or a data identifier and/or any other data which must be supplied to the traditional application 150 to permit it to properly perform its function.

The user selects desired context information (e.g. a desired customer and phone number) and activates the action control (e.g. "Dial" button), resulting in the selection of the current context and action. In response, the web browser 14 calls the JavaScript 'OnClick' event handler for the "Dial" button. The 'OnClick' event handler collects the currently selected context (i.e. the customer and phone number), and initiates a call 41 of the 'RequestActivity' JavaScript method or function in the web client interface logic 132 with parameters of the currently selected context (the customer and phone number) and the requested action (dial).

In step 404, the 'RequestActivity' function in the web client interface logic 132 acts as a URL processor that encodes the current action and context (the customer and phone number) along with a special identifier string ("specialcode") into a specially formatted URL 42 which, for example, appears as:
specialcode?cust="joe"&phone="3483748"&action="dial.
The special identifier string can be indicative, for example, of a type of action to be performed by a second application, a type of user command, and/or an event or an authentication service.

The 'RequestActivity' method next uses JavaScript to set the 'location' property of the 'window' object to the specially formatted URL. This initiates navigation to the new URL and, thus, triggers the navigation event listener, described above, in the web client host application interface logic 5 in step 406. The navigation event listener is, for example, the 'OnBeforeNavigate2' event handler in the Microsoft IWebBrowser2 ActiveX control. Alternatively, the navigation event listener may be the 'onStartURlOpen' event handler in the Mozilla embedded browser control (The Mozilla browser is available from the Mozilla Foundation, Mountain View, California). The navigation event listener senses the specially formatted URL. The web client host application interface logic 5 acts as a URL interpreter, extracting the context (the customer name and phone number) and the requested action (dialing) from the request and canceling the navigation to the URL. The extracted context and action data is sent to the web client host application 2.

In step 408, the web client host application 2 acts a communications processor. It halts the first mode of communications (i.e. normal http URL request) and forwards a request 44 to the traditional application 150 to perform the requested activity (dialing) using the received context (the customer name and phone number). A request as used herein comprises, for example, a message initiating an action such as to open or display images, review a report, perform a procedure and/or approve images, etc. The request 44 is forwarded to the traditional application 150 using the second mode of communications: i.e. whatever standard mechanisms are appropriate (COM, Windows messages, socket communication, etc). In the request 44 to the traditional application 150, the host application 14 also requests that status information be generated and transmitted by the performing application 150. As used herein, status information comprises information concerning one or more of: data or information being retrieved, an indication that a procedure is started or aborted, an indication that a step of a multi-step procedure is completed and/or an indication that a procedure completed successfully. In step 410, the traditional application 150 performs the requested action and provides status information, on an interim basis and/or as a final status. Requests or status information may flow either way, that is, from the traditional application 150 to the web client 14, or from the web client 14 to the traditional application 150.

As status information ('dialing phone', 'call aborted', 'call completed', etc.) is generated by the traditional application 150 which is performing the requested action, the traditional application 150 returns the status information as a message 45 to the web client host application 2 using the second mode of communication, i.e. whatever standard communication mechanisms are appropriate (COM, Windows messages, socket communication; etc). The web client host application 2 retrieves the Document Object Model of the current 'window' object using the IWebBrowser2 control 8, as described above. The web client host application 2 then navigates through the Document Object Model to locate a special JavaScript function by using the GetIDsOfNames method to obtain the identification parameters of the special JavaScript method. The special JavaScript function is now called with parameters representing the received status information 46. This allows the web client host application interface logic 5 to receive and pass status data 47 in the form of function parameters to the web client interface logic 132 without the need for polling by the web client 14. The web client 14, may than alter the image displayed to reflect the received status.

While the present invention has been described with reference to the specific diagrams and examples set forth above, numerous improvements and features may be incorporated in the present system without departing from its basic principles. For example, a second embodiment of the invention may further include an event handler procedure that recognizes an event identifier from the web browser 14 indicating that a web page is about to be loaded. The procedure then further parses the web address that specifies additional data or a command (in URL parameter format) from the web page, using user-definable logic. If the code logic identifies a predetermined command or data, a second procedure processes the command or data from the web browser 14.

A third embodiment of the present invention may employ a procedure based on user-definable logic, implemented, for example, in JavaScript, in order to accomplish more of the following functions. First, the system may initiate other procedures comprising business logic in order to present information from a local application or/and from a web page. Second, the system may directly display information within an application. Also, the system may initiate a procedure to command local non-web application functionality such as, for example, sending a request to a user interface application.

An additional procedure may be employed to further command local functionality not related to the web. Such a procedure may, for example, update local storage because of a status or configuration change associated with a web application. Such a procedure may also request data, perform procedures and tasks, and/or respond to a command from a web application. Another possible procedure may communicate data or a command to the web browser 14 to be displayed on a web page or processed by a web-enabled application from a non-web enabled application, and/or return a result as to whether the data or command has been accepted or rejected by web-enabled application.

## Claims

1. A system employed by at least one web browser compatible executable application for initiating an action by a second executable application, comprising:
a URL processor for generating, in response to a user command, a URL link in a predetermined particular format including context information and an action request identifier, the URL link representing an action to be performed by said second executable application;
a URL link interpreter, coupled to said URL processor via a first mode of communication, for identifying said particular format URL link, for extracting said context information and action request identifier from said particular format URL link, and for initiating termination of the first mode of communication; and
a communication processor, coupled to said URL link interpreter, for initiating communication of said extracted context information and action request identifier to said second executable application by a second mode of communication different from said first mode of communication.

2. A system according to claim 1, wherein:
said first mode of communication comprises at least one of, (a) Internet compatible communication and (b) Hyper Text Transfer Protocol communication; and
said second mode of communication comprises at least one of, (i) Microsoft Windows compatible message communication, (ii) socket communication, and (iii) COM communication.

3. A system according to claim 1, wherein said second executable application is a non-web enabled application.

4. A system according to claim 1, wherein:
said user command is received via a displayed web page; and
said URL processor sets a location property of said browser window object to an address of said particular format.

5. A system according to claim 1, wherein:
said context information comprises at least one of, (a) a user identifier, (b) a patient identifier, (c) a customer identifier, (d) a source identifier, (e) a destination identifier, (f) a password, (g) a computer operational session identifier, (h) an identifier identifying said second executable application to perform said user command and (i) a data identifier; and
said action request identifier identifies at least one of, (i) a type of action to be performed by said second application, (ii) a type of said user command, (iii) an event and (iv) an authentication service.

6. A system employed by at least one web browser compatible executable application for receiving status information associated with an action performed by a second executable application, comprising:
an interface processor for:
receiving application data from said second executable application in response to a user command entered via a displayed image;
parsing document object data associated with said displayed image to find a predetermined procedure identifier identifying an executable procedure for processing said received application data to be compatible with a web browser application; and
initiating execution of said identified executable procedure, in response to a command from said interface processor, to provide processed received application data to said web browser application.

7. A system according to claim 6, wherein said application data comprises at least one of, (a) a command identifier, (b) data and (c) status information associated with an action performed by said second executable application and wherein:
said image comprises a displayed web page processed for display by said web browser application; and
said document object data comprises a document object model associated with said web page.

8. A system according to claim 7, wherein said web page is represented by data comprising at least one of, (a) HTML compatible data, (b) XML compatible data and (c) SGML compatible data.

9. A system according to claim 6, further comprising a communication processor, coupled to said interface processor, for communicating with said second executable application to acquire said application data and wherein said communication processor communicates with said second executable application by at least one of, (i) Microsoft Windows compatible message communication, (ii) socket communication, and (iii) COM communication.

10. A system according to claim 9, wherein said communication processor establishes non-polling communication with said second executable application and said second executable application provides said status information to said communication processor in response to at least one of, (i) a command by said second executable application and (ii) a request from said communication processor.

11. A system according to claim 7, wherein said web browser application initiates display of said received status information and wherein said received status information includes at least one of, (a) an identifier identifying status of performance of a task by said second executable application, (b) a status description and (c) a text message.

12. A system employed by a first web browser compatible executable application for initiating an action by a second executable application and for acquiring status information associated with said action, comprising:
a URL processor for generating, in response to a user command entered via a displayed browser image, a URL link in a predetermined particular format including context information and an action request identifier, the URL link representing an action to be performed by said second executable application;
a URL link interpreter, coupled to said URL processor via a first mode of communication, for identifying said particular format URL link, for extracting said context information and action request identifier from said particular format URL link, and for initiating termination of said first mode of communication;
a communication processor, coupled to the URL link interpreter, for initiating communication of said context information and action request identifier to said second executable application by a second mode of communication different from said first mode of communication; and
an interface processor for:
receiving status information associated with said action performed by said second executable application in response to said user command;
parsing document object data associated with said browser image to find a predetermined procedure identifier identifying an executable procedure for processing said received status information to be compatible with a web browser application; and
initiating execution of said identified executable procedure, in response to a command from said interface processor, to provide processed received status information to a web browser application.

13. A method employed by at least one web browser compatible executable application for initiating an action by a second executable application, comprising the activities of:
generating, in response to a user command, a URL link in a predetermined particular format including context information and an action request identifier, the URL link representing an action to be performed by said second executable application;
initiating communication said URL link in a first mode of communications;
identifying said particular format link;
extracting said context information and action request identifier from said particular format link;
initiating termination of said first mode of communication; and
initiating communication of said context information and action request identifier to said second executable application by a second mode of communication different to said first mode of communication.

14. A method employed by at least one web browser compatible executable application for receiving status information associated with an action performed by a second executable application, comprising the activities of:
receiving application data associated with an action performed by said second executable application in response to a user command entered via a displayed browser image;
parsing document object data associated with said browser image to find a predetermined procedure identifier identifying an executable procedure for processing said received application data to be compatible with a web browser application; and
initiating execution of said identified executable procedure to provide processed received application data to said web browser application.

15. A method according to claim 14, further comprising the activity of
updating a local storage location in response to received application data and further comprising at least one of the activities of:
requesting data;
performing a procedure; and
responding to a command from a web enabled application as a result of a change in status of said web browser compatible executable application.
